# EUROPEAN PATENT APPLICATION

(11) **EP 2 169 683 A1**
(43) Date of publication of application: **31.03.2010**
(21) Application number: 09166151.2
(22) Date of filing: 22.07.2009
(51) Int. Cl.: G11B 33/02

(54) **Screwless portable hard disk case**

(30) Priority: 26.09.2008 TW 97137054
(71) Applicant: ASUSTeK Computer Inc., Beitou District Taipei (TW)
(72) Inventor: Chou, Chuan-Chang, Taipei (TW)
(74) Representative: Chaillot, Geneviève

(57) **Abstract**

A screwless portable hard disk case includes an elastic member on the lower cover. Two ends of an elastic member extend to be fixed to a lower cover, and a middle part of the elastic member forms a bridge portion having elasticity. The bridge portion extends toward an edge of the lower cover to form a locking portion. When the upper cover and the lower cover are combined, the locking portion is against an edge of the upper cover to keep the upper cover and the lower cover at a combing state to prevent the upper cover from being detached from lower cover. Thus, a portable hard disk case can be fixed in a situation without screws.

## Description

### BACKGROUND OF THE INVENTION

### Field of the Invention

The invention relates to a screwless portable hard disk case used for containing and supporting a hard disk and, more particularly, to a screwless portable hard disk case which does not need to be fixed with screws and is easy to disassemble.

### Description of the Related Art

A 2.5-inch small-size hard disk is built in a portable hard disk. In an internal through connection way, via connectors such as a universal serial bus (USB) or an IEEE 1394, the portable hard disk can be provided for a computer system to be externally connected directly, and it does not need to be connected via internal connectors such as an internal IDE connector or a SATA connector. Thus the convenience in usage can be improved significantly. Additionally, since the portable hard disk is small, easy to take and very portable, and the capacity of the 2.5-inch hard disk has jumped to be a high capacity, the portable hard disk becomes the most popular product in portable storage devices.

The portable hard disk usually utilizes a portable hard disk case to contain the 2.5-inch small-size hard disk. The portable hard disk case includes an external cover and an internal through circuit board. However, the cover on the market is fixed via screws. Although the screw locking is a common fixing way, since it is impossible for a common user to carry about a screwdriver with him or her, when the cover needs to be disassembled, it is rather inconvenient. Thus, the above situation departs from the convenience purpose of the portable hard disk.

### BRIEF SUMMARY OF THE INVENTION

The screwless portable hard disk case according to the invention includes a lower cover, an upper cover, a circuit board, and an elastic member. A runner is formed at the periphery of the lower cover. A block corresponding to the runner of the lower cover is disposed at the periphery of the upper cover. Via the block cooperating with the runner, the upper cover slides relative to the lower cover, and the upper cover is hermetically sealed closely combined to the lower cover to form an accommodation space to contain a hard disk. At the same time, the hard disk can be provided for a computer system to be externally connected with to access the hard disk by connecting the circuit board with the hard disk. Two ends of the elastic member extend downward to form two fixed portions to fix a close side of the lower cover, and thus a middle part of the elastic member forms a bridge portion. The bridge portion extends toward an edge of the accommodation space to form a locking portion. When the upper cover and the lower cover are combined, the locking portion is against an edge of the upper cover to allow the upper cover and the lower cover to keep at a combing state to prevent the upper cover from being detached from lower cover. Thus a portable hard disk case can be fixed in a situation without screws.

On the other hand, the elastic member can be designed with a protrusion. Cooperating with a through hole in the upper cover, the protrusion can be fastened into the through hole in the upper cover to prevent the upper cover from being detached from lower cover. Thus a screwless fixing can also be achieved.

An object of the invention is a screwless portable hard disk case, used for containing a hard disk, comprising:
a lower cover, wherein a runner is formed at the periphery of the lower cover;
an upper cover, wherein a block corresponding to the runner of the lower cover is disposed at the periphery of the upper cover, via the block cooperating with the runner, the upper cover slides relative to the lower cover, and the upper cover is hermetically sealed to the lower cover to form an accommodation space; and
an elastic member, wherein two ends of the elastic member extend downward to form two fixed portions to fix the elastic member to the lower cover, a middle part of the elastic member forms a bridge portion having elasticity toward the lower cover, the bridge portion extends toward an edge of the accommodation space to form a locking portion, and when the locking portion is against an edge of the upper cover, the upper cover is prevented from being detached from the lower cover.

Preferably, the screwless portable hard disk case further comprises a circuit board disposed on a side of the lower cover and used for being electrically connected with the hard disk.

Preferably, the circuit board further has a connecting slot.

Preferably, the elastic member and the circuit board are disposed on the same side.

Preferably, the height of the locking portion is higher than the height of the upper cover to allow the locking portion to be closely against the upper cover when the upper cover is combined with the lower cover.

Preferably, the runner of the lower cover has an opening and a slot, the block of the upper cover is vertically disposed into the runner from the opening and horizontally slides to the slot to hermetically seal the upper cover with the lower cover.

Preferably, after the block slides and fastens to the slot, the block is detached from the slot by sliding the upper cover parallel to the lower cover.

Another object of the invention is screwless portable hard disk case for containing a hard disk, comprising:
a lower cover, wherein a runner is formed at the periphery of the lower cover;
an upper cover, wherein a block corresponding to the runner of the lower cover is disposed at the periphery of the upper cover, via the block cooperating with the runner, the upper cover slides relative to the lower cover and is hermetically sealed with the lower cover to form an accommodation space, and a side of the upper cover has a through hole; and
an elastic member, wherein two ends of the elastic member extend downward to form two fixed portions to fix the elastic member to the lower cover, a middle part of the elastic member forms a bridge portion having elasticity toward the lower cover, the bridge portion has a protrusion, and when the protrusion is fastened into the through hole, the upper cover is prevented from being detached from the lower cover.

Preferably, the circuit board further has a connecting slot.

Preferably, the height of the protrusion is higher than the height of the upper cover to allow the protrusion to be fastened into the through hole of the upper cover when the upper cover is combined with the lower cover.

Preferably, the runner of the lower cover has an opening and a slot, the block of the upper cover is vertically disposed into the runner from the opening and horizontally slides to the slot to hermetically seal the upper cover with the lower cover.

Preferably, after the block slides to and fastens to the slot, the block is detached from the slot by sliding the upper cover parallel to the lower cover.

Preferably, the screwless portable hard disk case further comprises a circuit board, wherein the circuit board is disposed at one side of the lower cover and used for being electrically connected with the hard disk.

Preferably, the elastic member and the circuit board are fixed at the same side.

Preferably, the shape of the through hole is the same as the shape of the protrusion.

These and other features, aspects and advantages of the present invention will become better understood with regard to the following description, appended claims, and accompanying drawings.

### BRIEF DESCRIPTION OF THE DRAWINGS

FIG. 1 is a three-dimensional exploded diagram showing a screwless portable hard disk case according to a first embodiment of the invention;
FIG. 2A is a schematic diagram showing a screwless portable hard disk case whose circuit board is combined;
FIG. 2B and FIG. 2C are schematic diagrams showing the screwless portable hard disk case whose elastic member is assembled;
FIG. 3 is a schematic diagram showing the screwless portable hard disk case whose upper cover and lower cover are combined;
FIG. 4A∼4C are schematic diagrams showing actions of assembling the upper cover and the lower cover;
FIG. 5A and 5B are schematic diagrams showing the screwless portable hard disk case whose upper cover and lower cover are combined to contain a hard disk;
FIG. 6 is a schematic diagram showing a screwless portable hard disk case according to a second embodiment of the invention; and
FIG. 7 is a schematic diagram showing a screwless portable hard disk case according to a third embodiment of the invention.

### DETAILED DESCRIPTION OF THE EMBODIMENTS

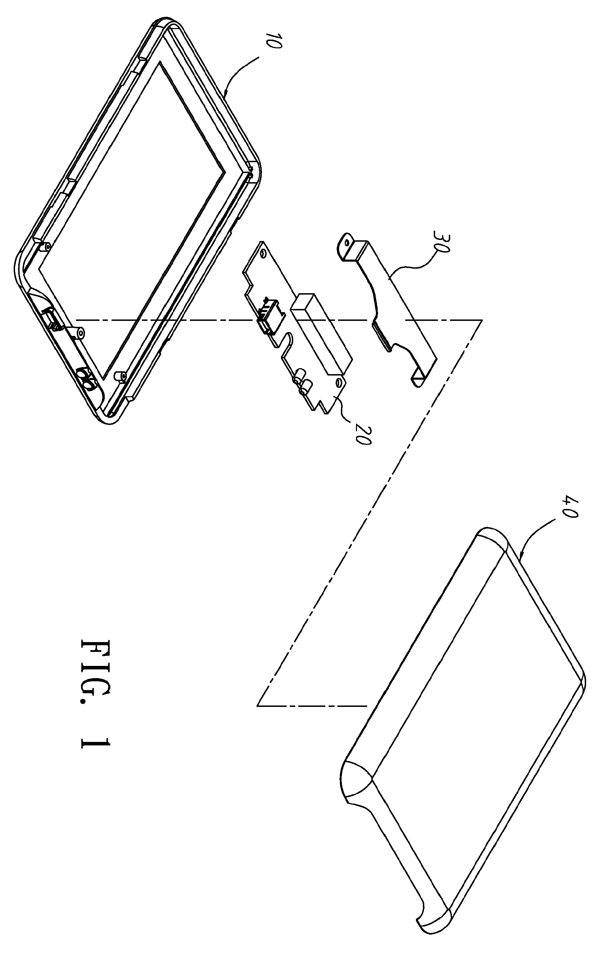

FIG. 1 is a three-dimensional exploded diagram showing a screwless portable hard disk case according to a first embodiment of the invention.

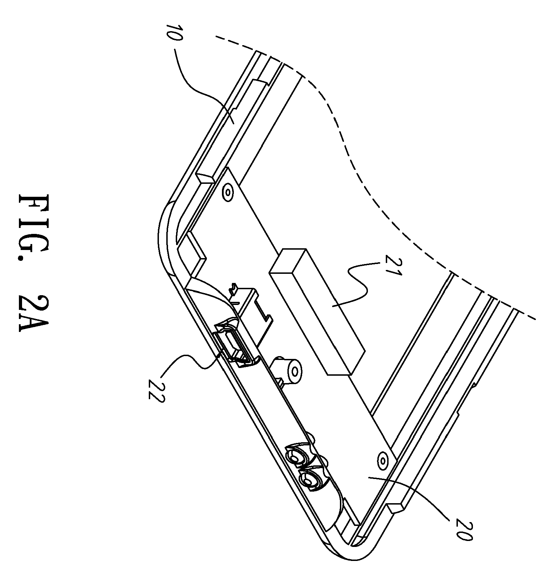

The screwless portable hard disk case according to a first embodiment of the invention includes an upper cover 40, a lower cover 10, a circuit board 20, and an elastic member 30. The shape of upper cover 40 is approximately the same as that of the lower cover 10. The upper cover 40 and the lower cover 10 are cooperatively connected to contain a hard disk such as the 2.5-inch small-size hard disk. The circuit board 20 is disposed at a side of the lower cover 10. In FIG. 2A, the circuit board 20 has a connection port 21 and a connection slot 22 thereon. The connection port 21 is used for connecting a hard disk. Generally speaking, the connection port 21 is a hard disk connecting interface such as integrated drive electronics (IDE), a serial advanced technology attachment (SATA) or a small computer system interface (SCSI), and it is provided for the hard disk to electrically connect with. The connection slot 22 is a connecting interface such as an USB or an IEEE 1394, and it is provided for a user to make a direct connection from the outside and access the hard disk.

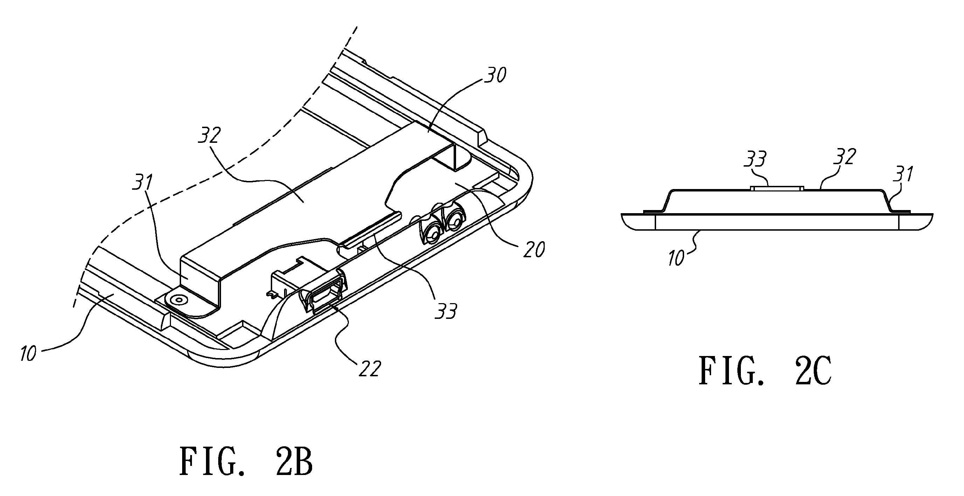

FIG. 2B and FIG. 2C are schematic diagrams showing the screwless portable hard disk case whose elastic member is assembled.

The elastic member 30 is disposed at a side of the lower cover 10. In FIG. 2B and FIG. 2C, the elastic member 30 and the circuit board 20 are disposed at the same side. The elastic member 30 also may be disposed at another side. Two ends of the elastic member 30 extend downward to the lower cover 10 to form fixed portions 31 to fix the elastic member 30 to the lower cover 10. Since the elastic member 30 and the circuit board 20 are disposed at the same side, the fixed portions 31 may pass through the circuit board 20 directly and fixed via fixers such as screws and bolts. The fixed portions 31 also may be fixed in other ways such as soldering and adhering.

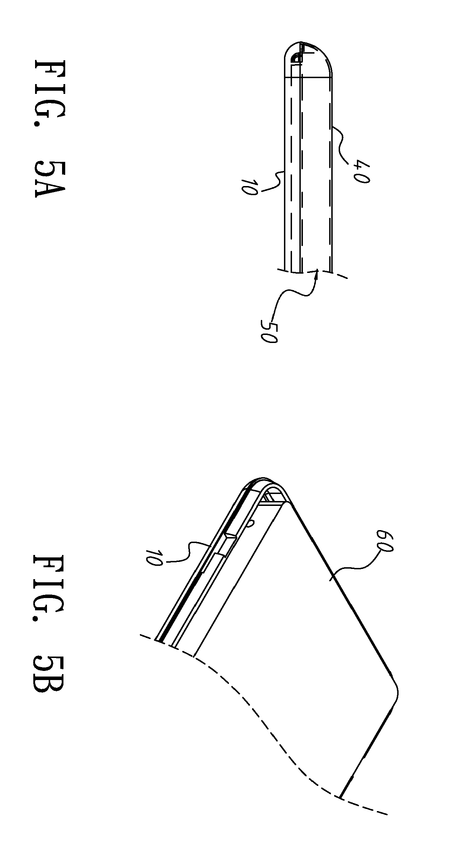

Since the fixed portions 31 at two ends of the elastic member 30 are fixed and supported, a middle part of the elastic member forms an suspended bridge portion 32 having elasticity toward the lower cover 10. In other words, if the bridge portion 32 of the elastic member 30 is pressed downward the lower cover 10, the bridge portion 32 has certain elasticity to restore itself to its original state after loosed. The bridge portion 32 is approximately at the middle portion. The bridge portion 32 extends toward an edge of the lower cover 10 (a side of the connection slot 22 of the circuit board 20) to form a locking portion 33. In other words, the locking portion 33 is fastened to the upper cover 40. Thus, the bridge portion 32 extends toward an edge of an accommodation space 50 (as shown in FIG. 5A) formed by combing the upper cover 40 and lower cover 10 to form the locking portion 33. Then, the locking portion 33 is able to be against an edge of the upper cover 40.

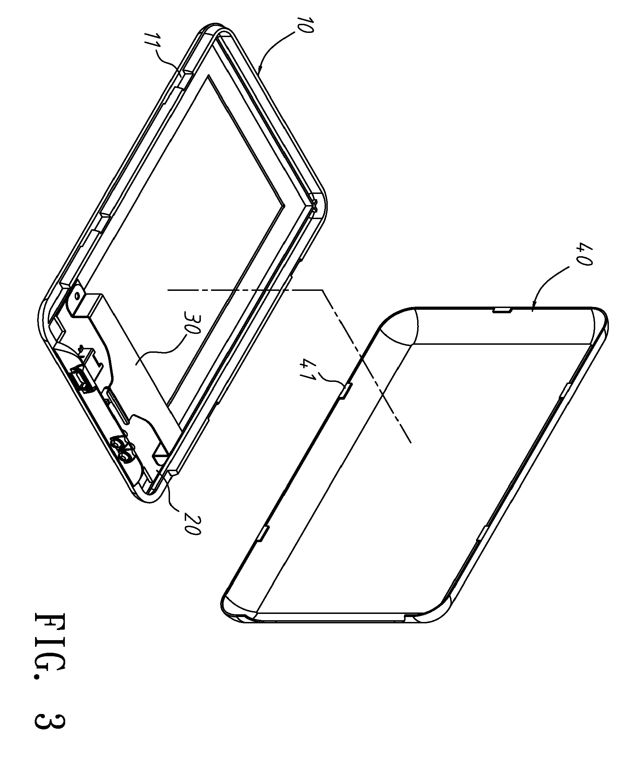

FIG. 3 is a schematic diagram showing the screwless portable hard disk case whose upper cover and lower cover are combined.

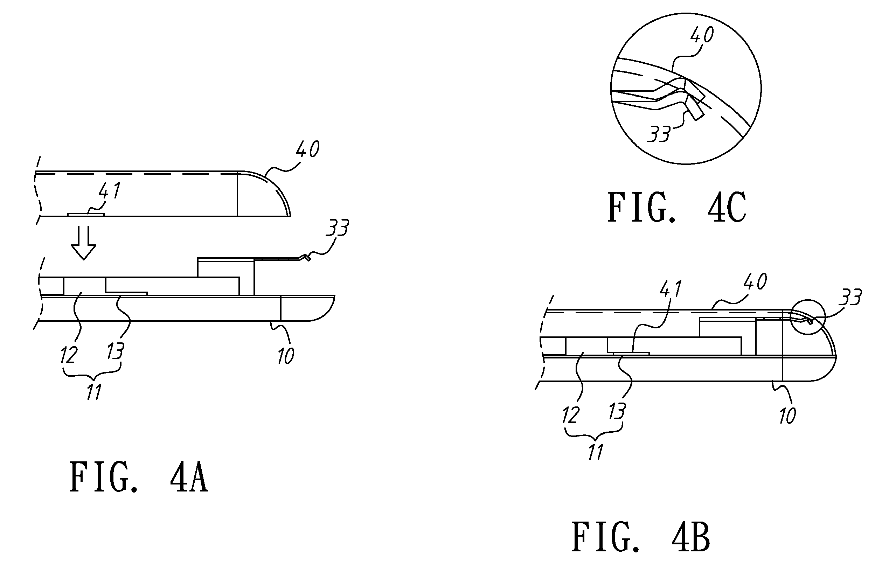

A block 41 is disposed at the periphery of the upper cover 40, and a runner 11 corresponding to the block 41 is formed at the periphery of the lower cover 10. Thus, the upper cover 40 and the lower cover 10 can be hermetically sealed. In assembling, firstly, the upper cover 40 is assembled downward vertically via the block 41 facing an opening 12 of the runner 11 of the lower cover 10 (as shown in FIG. 4A) until the block 41 contacts the bottom of the opening 12 of the runner 11. Afterwards, the upper cover 40 and lower cover 10 horizontally slide relative to each other. In other words, the upper cover 40 slides toward right relative to the lower cover 10 to allow the block 41 of the upper cover 40 to slide into the slot 13 of the runner 11 of the lower cover 10 (as shown in FIG. 4B). Since the height of the slot 13 is approximately the same as that of the block 41, after the block 41 is in the slot 13, it can only slides along the slot 13. That is, the upper cover 40 can only slides toward right and left relative to the lower cover 10.

The upper cover 40 slides toward right until the block 41 is against an end of the slot 13. In FIG. 4C, since the position of the locking portion 33 of the elastic member 30 is higher than the position of the upper cover 40, the locking portion 33 is pressed to deform downward to produce upward elasticity. Then, the locking portion 33 is closely against the upper cover 40 to keep the upper cover 40 at this position and combined with lower cover 10.

Consequently, after the upper cover 40 and the lower cover 10 are combined, the accommodation space 50 (as shown in FIG. 5A) can be formed therein to contain a hard disk 60 (as shown in FIG. 5B). In disassembling, the upper cover 40 only needs to be pushed in an opposite direction. In other words, the upper cover 40 slides toward the left side of the upper cover 40. The needed force is used to overcome the resistance of the locking portion 33 against the upper cover 40, and thus the hard disk 60 can be disassembled easily in a situation without screws or extra tools. The way of fixing the upper cover 40 and the lower cover 10 can be changed easily. The fixing way in the figure is just for explaining, but not for limiting the fixing way of the invention.

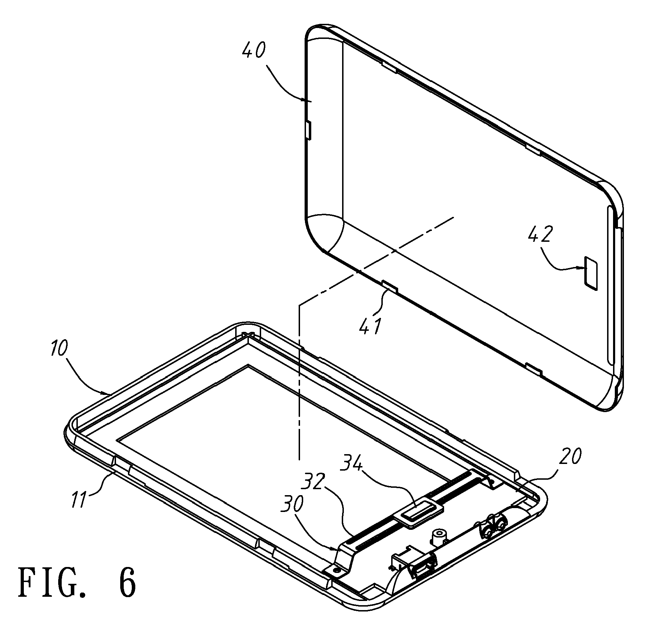

FIG. 6 is a schematic diagram showing a screwless portable hard disk case according to a second embodiment of the invention.

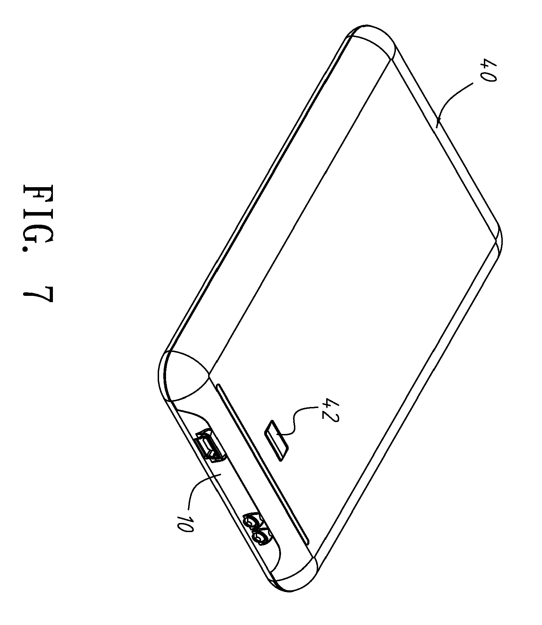

In this embodiment, a protrusion 34 is provided on the bridge portion 32 of the elastic member 30. Cooperating with a corresponding through hole 42 on the upper cover 40, after the upper cover 40 and the lower cover 10 are combined, the protrusion 34 is fastened into the through hole 42 (as shown in FIG. 7), the effect of preventing the upper cover 40 from being detached from the lower cover 10 also can be achieved. In disassembling, the protrusion 34 only needs to be pressed to be detached from the through hole 42. Thus, the upper cover 40 may slide relative to the lower cover 10 to be detached from the lower cover 10.

Consequently, the screwless portable hard disk case according to the invention can prevent the upper cover from being detached from the lower cover in a fixing mode that the upper cover and the lower cover only can slide horizontally and the locking portion of the elastic member is closely against the upper cover, or the protrusion of the elastic member cooperates with the through hole in the upper cover. At the same time, in disassembling, the upper cover only needs to be pushed to overcome the elastic resistance produced by the locking portion tightly against the upper cover, or the protrusion is pressed to be detached from the through hole, the hard disk can be disassembled easily in a situation without screws and tools. Thus a screwless portable hard disk case can be obtained.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A screwless portable hard disk case, used for containing a hard disk (60), comprising:
a lower cover (10), wherein a runner (11) is formed at the periphery of the lower cover (10);
an upper cover (40), wherein a block (41) corresponding to the runner (11) of the lower cover (10) is disposed at the periphery of the upper cover (40), via the block (41) cooperating with the runner (11), the upper cover (40) slides relative to the lower cover (10), and the upper cover (40) is hermetically sealed to the lower cover (10) to form an accommodation space (50); and
an elastic member (30), wherein two ends of the elastic member (30) extend downward to form two fixed portions (31) to fix the elastic member (30) to the lower cover (10), a middle part of the elastic member (30) forms a bridge portion (32) having elasticity toward the lower cover (10), the bridge portion (32) extends toward an edge of the accommodation space (50) to form a locking portion (33), and when the locking portion (33) is against an edge of the upper cover (40), the upper cover (40) is prevented from being detached from the lower cover (10).

2. The screwless portable hard disk case according to claim 1, further comprising a circuit board (20) disposed on a side of the lower cover (10) and used for being electrically connected with the hard disk (60).

3. The screwless portable hard disk case according to claim 2, wherein the circuit board (20) further has a connecting slot (22).

4. The screwless portable hard disk case according to claim 2, wherein the elastic member (30) and the circuit board (20) are disposed on the same side.

5. The screwless portable hard disk case according to claim 1, wherein the height of the locking portion (33) is higher than the height of the upper cover (40) to allow the locking portion (33) to be closely against the upper cover (40) when the upper cover (40) is combined with the lower cover (10).

6. The screwless portable hard disk case according to claim 1, wherein the runner (11) of the lower cover (10) has an opening (12) and a slot (13), the block (41) of the upper cover (40) is vertically disposed into the runner (11) from the opening (12) and horizontally slides to the slot (13) to hermetically seal the upper cover (40) with the lower cover (10).

7. The screwless portable hard disk case according to claim 6, wherein after the block (41) slides and fastens to the slot (13), the block (41) is detached from the slot (13) by sliding the upper cover (40) parallel to the lower cover (10).

8. A screwless portable hard disk case for containing a hard disk (60), comprising:
a lower cover (10), wherein a runner (11) is formed at the periphery of the lower cover (10);
an upper cover (40), wherein a block (41) corresponding to the runner (11) of the lower cover (10) is disposed at the periphery of the upper cover (40), via the block (41) cooperating with the runner (11), the upper cover (40) slides relative to the lower cover (10) and is hermetically sealed with the lower cover (10) to form an accommodation space (50), and a side of the upper cover (40) has a through hole (42); and
an elastic member (30), wherein two ends of the elastic member (30) extend downward to form two fixed portions (31) to fix the elastic member (30) to the lower cover (10), a middle part of the elastic member (30) forms a bridge portion (32) having elasticity toward the lower cover (10), the bridge portion (32) has a protrusion (34), and when the protrusion (34) is fastened into the through hole (42), the upper cover (40) is prevented from being detached from the lower cover (10).

9. The screwless portable hard disk case according to claim 8, wherein the circuit board (20) further has a connecting slot (22).

10. The screwless portable hard disk case according to claim 8, wherein the height of the protrusion (34) is higher than the height of the upper cover (40) to allow the protrusion (34) to be fastened into the through hole (42) of the upper cover (40) when the upper cover (40) is combined with the lower cover (10).

11. The screwless portable hard disk case according to claim 8, wherein the runner (11) of the lower cover (10) has an opening (12) and a slot (13), the block (41) of the upper cover (40) is vertically disposed into the runner (11) from the opening (12) and horizontally slides to the slot (13) to hermetically seal the upper cover (40) with the lower cover (10).

12. The screwless portable hard disk case according to claim 11, wherein after the block (41) slides to and fastens to the slot (13), the block (41) is detached from the slot (13) by sliding the upper cover (40) parallel to the lower cover (10).

13. The screwless portable hard disk case according to claim 8, further comprising a circuit board (20), wherein the circuit board (20) is disposed at one side of the lower cover (10) and used for being electrically connected with the hard disk (60).

14. The screwless portable hard disk case according to claim 13, wherein the elastic member (30) and the circuit board (20) are fixed at the same side.

15. The screwless portable hard disk case according to claim 8, wherein the shape of the through hole (42) is the same as the shape of the protrusion (34).
